# EUROPÄISCHE PATENTSCHRIFT

(11) **EP 1 706 652 B1**
(45) Veröffentlichungstag und Bekanntmachung des Hinweises auf die Patenterteilung: **26.03.2008**
(21) Anmeldenummer: 04821054.6
(22) Anmeldetag: 17.11.2004
(51) Int. Cl.: F16B 7/18, F16B 37/04

(54) **ANSCHLUSSVERBINDUNGSANORDNUNG FÜR ZWEI STRANGARTIGE HOHLPROFILE**
JOINING ASSEMBLY FOR TWO BAR-TYPE HOLLOW PROFILED MEMBERS
ENSEMBLE D'ASSEMBLAGE DE DEUX PROFILES CREUX CONTINUS

(30) Priorität: 22.01.2004 DE 202004000978 U; 25.06.2004 DE 102004031038; 29.09.2004 DE 202004015101 U
(43) Veröffentlichungstag der Anmeldung: 04.10.2006
(73) Patentinhaber: Holscher, Winfried, K. W., 78234 Engen (DE)
(72) Erfinder: Holscher, Winfried, K. W., 78234 Engen (DE)
(74) Vertreter: Hiebsch, Gerhard F.
(86) Internationale Anmeldenummer: PCT/EP2004/013011
(87) Internationale Veröffentlichungsnummer: WO 2005/073568

(56) Entgegenhaltungen:
- DE-A1- 19 840 057
- DE-U1- 9 215 843
- DE-U1- 20 307 710
- US-B1- 6 260 813

## Beschreibung

Anschlussverbindungsanordnung für zwei strangartige Hohlprofile

Die Erfindung betrifft eine Anschlussverbindungsanordnung eines -- einen Profilkanal sowie zumindest einen hinterschnittenen Nutenraum an einer Längsnut aufweisenden -- ersten strangartigen Hohlprofils an ein anderes Werkstück mittels eines Schraubelementes od. dgl. Verbindungsorgans nach dem Oberbegriff des Patentanspruches 1.

Eine solche Anordnung wird in der Schrift zu DE 203 07 710 U1 des Anmelders vorgestellt. Der eine Öffnung des Werkstückes durchsetzende und im Innenraum in ein Gegenelement einsetzbare Schaft einer Spannschraube ist in einer als Längsnut ausgebildeten Öffnung eines Werkstückes so festgelegt, dass ein Gewindebereich der Spannschraube über die Stirnfläche des Werkstücks hinausragt und in Abstand zu dieser mit einem Schraubkopf versehen ist. Letztere ist in eine hinterschnittene Längsnut eines anderen Werkstücks einschiebbar ausgebildet. Der Schaft der Spannschraube durchsetzt eine Hülse der Anordnung, wobei diese Hülse mit von ihrer-Außenfläche abragenden seitlichen Außenrippen versehen ist sowie in der Längsnut des Werkstücks lösbar festlegbar angeordnet wird.

Die DE 92 15 843 U1 des Anmelders beschreibt eine Verbindungsvorrichtung zum Festlegen in einem hinterschnittenen Innenraum einer Längsnut eines Hohlprofils od. dgl. Werkstücks mit wenigstens einer die Breite des engen Nutenquerschnitts übersteigenden Erstreckung zum Anschluss eines die Längsnuten aufweisenden ersten Werkstückes an ein anderes Werkstück, welches seinerseits mit Längsnuten versehen ist, deren Querschnitt sich zur Profilstirn hin öffnet. Dieses Element kommt insbesondere bei metallischen Hohlprofilen zur Anwendung, deren Innenraum von außen her nicht zugänglich ist; es ist etwa quaderförmig ausgebildet und weist wenigstens zwei einander gegenüberliegende, in einem Winkel geneigte Flankenwände auf sowie ein Federorgan, das einerseits an einer der geneigten Flankenwände festliegt und anderseits die engere Oberfläche des Elements mit seinem freien Ende übergreift. Dieses ist in entspanntem Zustand der Feder in Abstand zum Element angeordnet. Wird das Federorgan an das Mutterelement angedrückt, kann diesesmit seiner Schmalseite zuerst -- ohne weiteres in die hinterschnittene Nut eingeschoben werden.

Bei einem anderen Verbindungsorgan zum Festlegen in einem hinterschnittenen Nutenraum einer Längsnut eines Hohlprofils nach DE 198 40 057 A1 des Anmelders sowie zum Anschluss des Hohlprofils an ein anderes, seinerseits mit entsprechenden Längsnuten versehenes Werkstück, ist an der Oberfläche von Winkelarmen eines winkelförmigen Formstückes als Befestigungs- oder Verbindungseinrichtung jeweils zumindest eine der Breite einer den engen Nutenquerschnitt bildenden Längsnut etwa entsprechende Anformung vorgesehen sowie im Winkelarm wenigstens eine ihn durchsetzende Schraube angebracht; die Breite des Winkelarms übersteigt die Breite der Längsnut. Zudem verjüngt sich der Querschnitt der Anformung von der Oberfläche des Winkelarms weg.

In Kenntnis dieser Gegebenheiten hat sich der Erfinder das Ziel gesetzt, eine betriebssichere Befestigungsmöglichkeit von insbesondere stranggepressten Hohlprofilen mehreckigen -- bevorzugt rechteckigen -- Querschnittes zu schaffen, die miteinander zu verbinden sind, dies vor allem in einem etwa rechten Winkel. Insbesondere soll ein System verbessert werden, bei dem die Profilstirn des einen Werkstückes auf einer Längsseite des anderen Werkstückes aufliegt und daran -- weitestgehend verdrehsicher -- gehalten wird. Ein weiteres Ziel des Erfinders ist es, den Verbindungsvorgang an sich erheblich zu vereinfachen sowie vor allem die Handhabung des Verbindungsorgans zu verbessern, indem letzteres als eine Einheit ausgestaltet wird.

Zur Lösung dieser Aufgabe führt die Lehre des unabhängigen Anspruchs; die Unteransprüche geben günstige Weiterbildungen an. Bei angegebenen Bemessungsbereichen sollen auch innerhalb der genannten Grenzen liegende Werte als Grenzwerte offenbart und beliebig einsetzbar sein.

Erfindungsgemäß ist an dem einen Hohlprofil ein streifenartiges Sockelprofil festgelegt, das radial zur Längsachse des Profilkanals verläuft und zumindest einends eine Stufenfläche zur Aufnahme des Schraubelementes aufweist, welch letzteres in Ruhelage innerhalb der Seitenkonturen des Sockelprofils liegt und dieses in Anschlussstellung zumindest an einer Seite überragt und in den Hinterschneidungsraum des Nutenraumes des anderen Hohlprofils haltend eingreift. Bevorzugt ist das Sockelprofil an der Stirnfläche des Hohlprofils festgelegt.

Als günstig hat es sich erwiesen, das Sockelprofil mit einer Fußplatte an einem Kopfstreifen geringerer Längsschnittlänge -- als es die Länge der Fußplatte ist -- auszustatten, so dass ein Teil von letzterer die Stirnseite/n des Kopfstreifens unter Ausbildung ihrer Oberfläche als Stufenfläche überragt.

Nach einem anderen Merkmal der Erfindung weist das Schraubelement einen in Draufsicht i.w. rechteckigen Sockelstreifen auf, von dessen Oberfläche eine Schraub- oder Sockelhülse für eine sie axial durchsetzende Schraube aufragt, insbesondere für eine Innenmehrkantschraube. Die Außenkontur dieser Schraub- oder Sockelhülse soll zwei diagonal zu ihrem Innenraum angeordnete -- bevorzugt von einer Längskante des Sockelstreifens ausgehende -- Eckkanten aufweisen, von denen jeweils beidseits eine ebene Wandfläche als Teil der Hülsenwand ausgeht; letztere geht in einen querschnittlich gekrümmten Bogenbereich der Hülsenwand über. Diese Formgebung verbessert die Drehfähigkeit des Schraubelements, wenn dieses in eine Längsnut eines Hohlprofils eingesetzt ist.

Vorteilhafterweise überragt der Sockelstreifen in seiner Längsachse die Hülsenwand. Die Eckbereiche dieses Sockelstreifens können in Draufsicht teilkreisförmig ausgebildet, und der Eckkante der Hülsenwand kann ein gerundeter Eckbereich des Sockelstreifens zugeordnet sein. Das Sockelprofil soll zudem von einem etwa zentrisch in seinem Kopfstreifen angeordneten Durchbruch für ein Schrauborgan durchsetzt sein, welches im Profilkanal des Hohlprofils festlegbar ist, dessen Stirnfläche der Firstfläche des Sockelprofils anliegen soll.

Im Rahmen der Erfindung liegt es, dass eine Ober- oder Stufenfläche des Sockelprofils -- oder deren beide -- in einem Abstand zur Stirnfläche des Hohlprofils verläuftbzw. verlaufen --, welcher der Höhe der Stirnseite des Kopfstreifens entspricht bzw. der Summe aus der Dicke von - - den Hinterschneidungsraum übergreifenden und die Längsnut begrenzenden -- Formrippen sowie der Dicke des Sockelstreifens.

Von erfindungsgemäßer Bedeutung ist zudem, dass die Längsachse des Sockelstreifens des Schrauborgans in Einschublage parallel zur Längsachse des Hohlprofils verläuft und der Sockelstreifen in der Längsnut verfahrbar angeordnet ist. Zum Verbinden beider Hohlprofile werden erfindungsgemäß die Schrauborgane in Anschlussstellung den Hinterschneidungsraum des einen Hohlprofils übergreifende Formrippen jeweils von deren Sockelstreifen untergriffen, wodurch die Formrippen des einen Hohlprofils an der Stirnfläche des anderen Hohlprofils anliegend fest gehalten werden. In Anschlussstellung steht dann die Längsachse des Sockelstreifens quer zur Längsachse des zugeordneten Hohlprofils.

Als Verbindungselement soll im Rahmen der Erfindung eine in die Längsnut eingesetzte Hülse mit seitlichen Außenrippen dienen, die in Radialnuten des Hohlprofils eingesetzt werden können. Der Hülse ist eine Spannschraube zugeordnet, die in den -- gegebenenfalls teilweise mit einem Mehrkantquerschnitt versehenen -- Hülseninnenraum koaxial eingesetzt zu werden vermag; die Spannschraube wird durch ihre Hülse am Hohlprofil gehalten.

Die zumindest in ihrem freien Endbereich querschnittlich etwa dreiecksförmige Außenrippe soll mit ihren Rippenflächen in Formrinnen der Hülsenumfangsfläche übergehen, und die beiden Rippenflächen sollen bevorzugt in eine Rippenspitze übergehen, die als Schneide ausgebildet sein kann.

Bevorzugt weist die Außenrippe einends eine Seitenkante auf, die mit einer etwa durch die Mitte der Außenrippe gelegten Radiallinie einen Winkel von etwa 45° bildet; die Außenrippe ist an ihrer geneigten Seitenkante angestaucht.

Diese Hülse bietet zumindest drei zu ihrer Mittelachse parallele Gruppen von Außenrippen an, die in Befestigungslage Radialnuten zugeordnet sind; letztere sollen im Nutentiefsten der Längsnut des Hohlprofils sowie in zueinander weisenden Flächen von die Längsnut an der Profilseitenfläche begrenzenden Formrippen angebracht sein. Dabei hat es sich als günstig erwiesen, die Seitenkanten einer Gruppe von Außenrippen parallel zur Mittelachse miteinander fluchten zulassen. Die geneigte Seitenkante der Außenrippe bildet vorteilhafterweise einen Berührungswiderstand zwischen der Hülse und den zugeordneten Radialnuten, welcher einen Einsatz der Außenrippen ermöglicht.

Von erfinderischer Bedeutung ist die Ausgestaltung der erwähnten Hülse und ihr Zusammenspiel mit der ihr zugeordneten Spannschraube; die in die Längsnut eingesetzte Hülse ist -- wie gesagt -- mit von ihrer Umfangsfläche abragenden seitlichen Außenrippen versehen, die in Radialnuten des Hohlprofils einsetzbar ausgebildet sind. Zudem wird der Hülse eine in ihren Innenraum einschiebbare Spannschraube zugeordnet, an deren Schraubenkopf ein Rundschaft angeformt ist. Dieser soll in Abstand zum Schraubenkopf in einen koaxialen Schraubschaft übergehen.

Als günstig hat sich ein an einen Schraubenkopf der Spannschraube angeformter Schaft erwiesen, der in Abstand zum Schraubenkopf mit dem Gewinde versehen ist. Zwischen dem Schraubenkopf und dem Gewinde erstreckt sich ein Rundabschnitt des Schaftes, dessen Länge etwa zwei Dritteln der Schaftlänge entspricht.

Zudem soll der besseren Befestigung halber der Außendurchmesser des Gewindes bzw. des Schraubschaftes größer sein als der Durchmesser des Hülsenraums oder eines Durchbruches in einer den Hülseninnenraum begrenzenden und vom Schaft durchsetzten Rückwand der Hülse. Da erfindungsgemäß das Gewinde am Schaft eine zum Schraubenkopf weisende Ringkante bildet, dient letztere als Anschlagorgan, dessen Partner die ringförmige Rückwand der Hülse ist. Nach einem weiteren Merkmal der Erfindung ist die Spannschraube zwischen ihrem Schraubenkopf und der Ringkante in der Hülse axial verschiebbar gelagert; bei Anschlag des Schraubenkopfes der Spannschraube am zugeordneten, äußeren Hülsenrand der Hülse ragt das Gewinde andernends aus der Hülse.

Vorteilhafterweise soll ein Längsabschnitt des Innenraumes der Hülse als ein Mehrkantquerschnitt -- insbesondere als Sechskantquerschnitt -- ausgebildet sein und an einen zylindrischen Abschnitt des Hülseninnenraumes anschließen, dessen achsparallele Kanten als Kerbrinnen ausgebildet sind.

Vorteilhafterweise entspricht die axiale Länge des zylindrischen Abschnittes des Hülseninnenraumes etwa der Länge des Gewindes der Spannschraube.

Im Rahmen der Erfindung liegt auch, dass an die Hülse an ihrem der Rückwand fernen Ende ein axialer Kragen angeformt ist, innerhalb dessen der Schaft verschoben zu werden vermag. Dieser Kragen begrenzt mit der Umfangsfläche der Hülse eine Ringzone dieser Hülse, zudem verlängert die Höhe des Kragens die Kontaktlänge zwischen Hülse und Spannschraube. Die bevorzugte Kontaktlänge misst etwa 20,5 mm.

Erfindungsgemäß geht die zumindest in ihrem freien Endbereich querschnittlich etwa dreiecksförmige Außenrippe mit ihren seitlichen Rippenflächen in Formrinnen der Hülsenumfangsfläche über. Die beiden Rippenflächen sollen in eine Rippenspitze übergehen, die bevorzugt als Schneide ausgebildet ist.

Bevorzugt weist die Außenrippe einends eine Seitenkante auf, die mit einer etwa durch die Mitte der Außenrippe gelegten Radiallinie einen Winkel von etwa 45° bildet; die Außenrippe ist an ihrer geneigten Seitenkante angestaucht.

Auch kann ein tellerartiger, flach quaderförmiger Körper an einer Seitenkante der Außenrippe vorgesehen werden, um die Sitzstellung der Hülse zu verbessern. Dieser tellerartige Körper übergreift die Außenrippen an deren dem Kragen fernen Rippenfläche axial. Die geneigte Seitenkante der Außenrippe bildet einen Berührungswiderstand zwischen der Hülse und den zugeordneten Radialnuten. Letztere sind im Nutentiefsten der Längsnut des Hohlprofils sowie in zueinander weisenden Flächen von die Längsnut an der Profilseitenfläche begrenzenden Formrippen angebracht.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: die Stirnansicht eines -- Längsnuten aufweisenden -- stranggepressten Hohlprofils mit in zwei der Längsnuten eingeschobenen Verbindungsorganen für ein an jenes Hohlprofil rechtwinkelig angesetztes zweites Hohlprofil gleicher Formgebung;
- Fig. 2:: eine Seitenansicht eines Abschnitts des Hohlprofils mit einem zugeordneten, geschnitten dargestellten Sockelprofil als Teil eines Verbindungsorgans;
- Fig. 3:: das Sockelprofil gemäß Fig. 2 in verkleinerter Wiedergabe;
- Fig. 4:: einen vergrößerten Ausschnitt aus Fig. 3 bzw. 14 nach deren Pfeil IV;
- Fig. 5:: die Draufsicht auf das Sockelprofil;
- Fig. 6:: eine Schrägsicht auf das Sockelprofil;
- Fig.7, 8:: Draufsicht und Seitenansicht eines Schraubelements für das Sockelprofil;
- Fig. 9:: die Draufsicht auf eine andere Ausgestaltung des Schraubelementes;
- Fig. 10:: die Stirnansicht eines Teiles eines Hohlprofils mit Seitenansicht eines zugeordneten anderen Hohlprofils während des Einführens eines Schraubelementes;
- Fig. 11:: die Hohlprofile der Fig. 10 in zueinander festgelegter Stellung;
- Fig. 12:: eine Schrägsicht auf eine andere Ausgestaltung des Sockelprofils;
- Fig. 13:: die Draufsicht auf das Sockelprofil der Fig. 12;
- Fig. 14:: den Längsschnitt durch Fig. 13 nach deren Linie XIV-XIV;
- Fig. 15:: die Stirnansicht eines weiteren Hohlprofils mit eingebautem Verbindungselement;
- Fig.16:: eine Seitenansicht des teilweise geschnittenen Hohlprofils der Fig. 15;
- Fig. 17:: eine vergrößerte Draufsicht auf das Verbindungselement der Fig. 15;
- Fig. 18:: einen Teil des Verbindungselementes in vergrößerter und teilweise geschnittener Seitenansicht;
- Fig. 19:: einen vergrößerten Ausschnitt aus Fig. 18;
- Fig. 20:: eine Seitenansicht einer Hülse mit dieser axial zugeordneter Spannschraube;
- Fig. 21:: die teilweise geschnittene Paarung der Fig. 20 in einer anderen Betriebsstellung;
- Fig. 22:: eine Schrägsicht auf die Hülse der Fig. 20, 21;
- Fig. 23:: eine Frontansicht zu Fig. 22;
- Fig. 24:: einen vergrößerten Ausschnitt aus Fig. 20, 29 nach deren Feld XXIV;
- Fig. 25, 27:: jeweils eine der Darstellung in Fig. 22 etwa entsprechende Wiedergabe einer anders gestalteten Hülse;
- Fig. 26:: einen Längsschnitt durch die Hülse der Fig. 25 mit zugeordneter Spannschraube;
- Fig. 28:: eine Frontansicht zu Fig. 27;
- Fig. 29:: eine der Fig. 20 entsprechende Wiedergabe der Hülse nach Fig. 27 mit dieser axial zugeordneter Spannschraube;
- Fig. 30, 31:: jeweils die teilweise geschnittene Paarung der Fig. 29 in einer anderen Betriebsstellung;
- Fig. 32:: einen geschnittenen Bereich aus Fig. 22 in anderer Ausgestaltung;
- Fig. 33:: eine vergrößerte Schrägsicht auf einen Ausschnitt der Hülse nach Fig. 32.

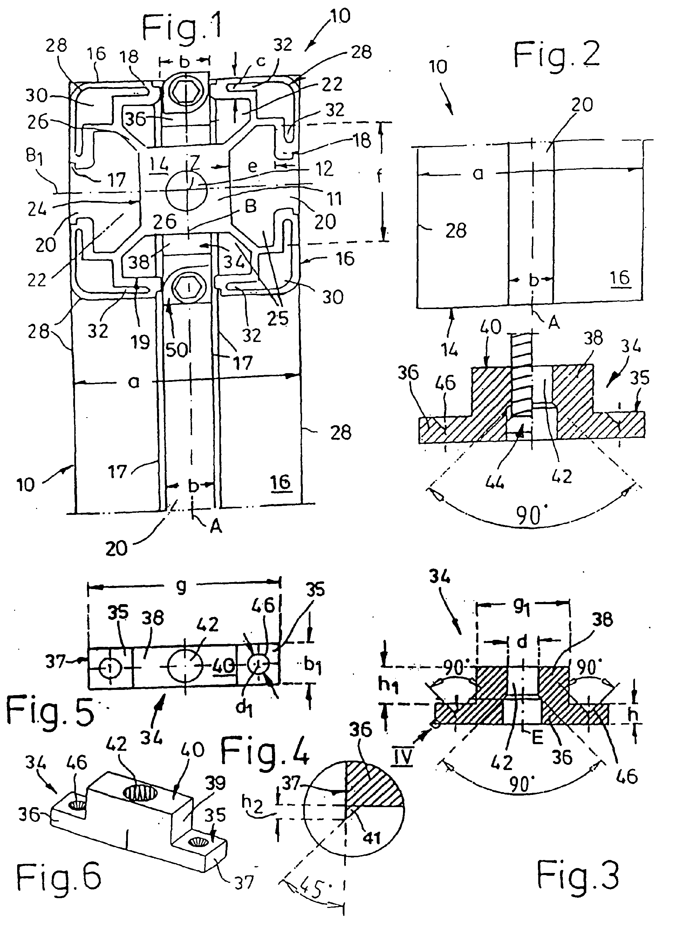

Ein Hohlprofil 10 quadratischen Querschnitts der äußeren Seitenlänge a von hier 45 mm mit in Fig. 1 durch das -- von einem in der Profillängsachse A verlaufenden Profilkanal 12 bestimmten -- Zentrum Z seiner Stirnfläche 14 gelegten Querschnittsachsen B, B₁ als Symmetrieachsen weist eine den Profilkanal 12 enthaltende Mittelsäule 11 quadratischen Querschnitts auf sowie jeweils in der Mitte seiner Profilseitenflächen 16 eine -- beidseits von Formrippen 18 der Dicke c von hier 6 mm begrenzte -- Längsnut 20 einer Breite b von beispielsweise 12 mm, die zur Profillängsachse A hin in einen querschnittlich hinterschnittenen Nutenraum 22 übergeht. Die Formrippen 18 sind an der Profilseitenfläche 16 mit Eckausnehmungen 17 versehen.

Der Hinterschneidungs- oder Nutenraum 22 wird zum Stirnflächenzentrum Z hin von einem Boden oder Nutentiefsten 24 begrenzt und ist als eine von jenen Formrippen 18 übergriffene rinnenartige Ausnehmung der Höhe e von etwa 8 mm sowie einer maximalen Breite f von etwa 20 mm gestaltet. Das freie Ende jeder der rinnenartigen Ausnehmungen bildet in der Stirnfläche 14 des Hohlprofils 10 eine sechseckige Stirnöffnung 25, wie auch die Längsnut 20 in den Profilseitenflächen 16 eine gestreckte Öffnung darstellt.

Den vier die Nutentiefsten 24 bildenden Außenflächen jener Mittelsäule 11 ist jeweils beidseits ihres Querschnitts eine armartige Rippe 26 zugeordnet, die zu den Querschnittsachsen B, B₁ in einem Winkel von 45° geneigtalso in der Stirnfläche 14 diagonal -- verläuft. Jede dieser an die Mittelsäule 11 angeformten Rippen 26 geht in einen der Eckbereiche 28 des Hohlprofils 10 über; in jedem dieser Eckbereiche 28 befindet sich -- parallel zur Profillängsachse A -- ein Eckkanal 30 nahezu quadratischen Querschnitts, von dem schmale Sackschlitze 32 der Formrippen 18 ausgehen, die in letzteren achsparallel verlaufen.

Das in Fig. 1 obere Hohlprofil 10 wird an einer seiner Stirnflächen 14 von einem rechtwinkelig zugeordneten zweiten Hohlprofil 10 identischen Querschnitts untergriffen und ist durch Verbindungsorgane angeschlossen. Beide Hohlprofile 10 sind bevorzugt aus einer Aluminiumlegierung stranggepresst.

In Fig. 2 ist das eine Ende des in Fig. 1 oberen Hohlprofils 10 skizziert mit einem an seiner Stirnfläche 14 festzulegenden Sockelprofil 34 für in Fig. 1 bei 50 angedeutete Verbindungsorgane. Dieses Sockelprofil 34, dessen Längsachse mit E kenntlich gemacht ist, weist eine Fußplatte 36 der beispielsweisen Länge g von 44 mm, einer Breite b₁ von 10 mm sowie einer Höhe h von 5 mm auf, an das ein mittiger Kopfstreifen 38 gleicher Breite b₁, geringer Länge g₁ von etwa 24 mm sowie der Höhe h₁ von etwa 9 mm angeformt ist. Die Fußplatte 36 bildet beidseits des mit ihr einstückigen Kopfstreifens 38 jeweils eine zu dessen Firstfläche 40 parallele Stufenfläche 35, welche an die Stirnseite 39 des Kopfstreifens 38 anschließt. An die Stirnseiten 37 der Fußplatte 36 können gemäß Fig. 4 querschnittlich dreiecksförmige Bodenleisten 41 der Höhe h₂ von 0,3 mm angeformt sein.

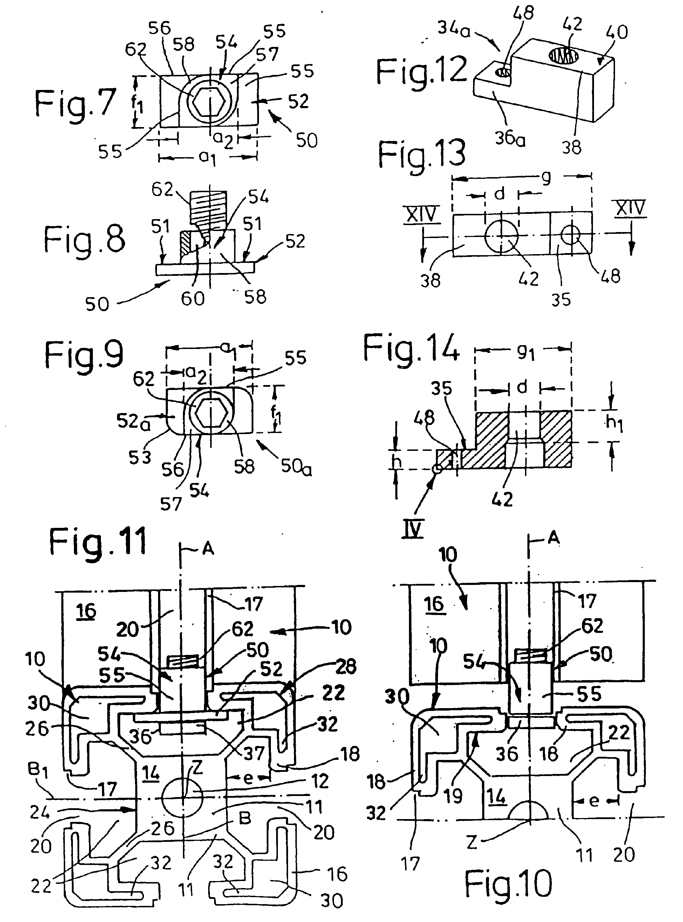

Dieses Sockelprofil 34 wird mittels einer -- einen zentralen Durchbruch 42 des Durchmessers d von 8 mm durchgreifenden -- in Fig. 2 bei 44 angedeuteten Schraube im Profilkanal 12 so festgelegt, dass die Firstfläche 40 des Kopfstreifens 38 des Sockelprofils 34 an der Stirnfläche 14 des Hohlprofils 10 anliegt. Beidseits des Kopfstreifens 38 ist in der Stufen- oder Oberfläche 35 der Fußplatte 36 bei 46 eine Vertiefung des Durchmessers d₁ von 5 mm angedeutet; statt deren können auch -- gemäß Fig. 12 -- Schraublöcher 48 vorgesehen werden.

Wenn das Sockelprofil 34 an der Stirnfläche 14 des Hohlprofils 10 festgelegt ist, verlaufen die von den beiden Enden der Fußplatte 36 angebotenen Oberflächen 35 in Abstand h₁ zur Stirnfläche 14 und dienen jeweils zur Auflage eines Schraubelementes 50, mit dem die beiden sich kreuzenden Hohlprofile 10 verbunden werden.

Dieses aus einem harten Metall gefertigte Schraubelement 50 umfasst einen rechteckigen Sockelstreifen 52 -- der Länge a₁ von etwa 16 mm, der Dicke c₁ von etwa 3 mm und der Breite f₁ von etwa 9 mm -- sowie eine diesem angeformte Schraubhülse 54. Jene Breite f₁ des Sockelstreifens 52 ist auch die Breite f₁ der Sockelhülse 54, deren Länge a₂ etwa 9 mm misst, also der Breite f₁ entspricht. Zwischen zwei diagonal zueinander stehenden, jeweils von zwei in Draufsicht rechtwinkelig aufeinander stoßenden Wandflächen 55 an den Längskanten 56 des Sockelstreifens 52 gebildeten Eckkanten 57 der Sockelhülse 54 bzw. zwischen jenen Wandflächen 55 ist die Außenkontur der Sockelhülse 54 in Draufsicht in einem 90°-Bogenbereich 58 teilkreisförmig gestaltet. Im zylindrischen Innenraum 60 der Sockelhülse 52 sitzt eine Innensechskant-Schraube 62.

Bei der Ausgestaltung des Schraubelementes 50ₐ nach Fig. 9 sind zwei Eckbereiche 53 des Sockelstreifens 52ₐ gerundet und liegen den Eckkanten 57 der Schraub- oder Sockelhülse 54 gegenüber.

Beim Zusammenfügen zweier Hohlprofile 10 wird gemäß Fig. 10, 11 der Sockelstreifen 52 des -- auf eine Stufenfläche 35 der Fußplatte 36 des am oberen Hohlprofil 10 in beschriebener Weise festgelegten Sockelprofils 34 -- aufgeschraubten Schraubenelements 50 bzw. 50ₐ auf die Fußplatte 36 so aufgelegt, dass er seitlich nicht übersteht, wobei die Längsachse des Sockelstreifens 52 parallel zur Längsachse A des Hohlprofils 10 verläuft. Dann kann das Schraubelement 50 in die Längsnut 20 des Hohlprofils 10 eingesetzt werden. Wenn auf dessen Profilseitenfläche 16 die Stirnfläche 14 des anderen Hohlprofils 10 aufsitzt, wird das Schraubelement 50 bzw. 50ₐ mittels eines INBUS-Schlüssels an der INBUS-Schraube 62 um 90° gedreht, so dass die abkragenden Bereiche des Sockelstreifens 52 bzw. 52ₐ die benachbarten Formrippen 18 untergreifen. Durch einen weiteren Schraubvorgang werden die Oberflächen 51 des Sockelstreifens 52 bzw. 52ₐ an die Unterflächen 19 der Formrippen 18 herangezogen und halten die Hohlprofile 10 klemmend aneinander.

Das Sockelprofil 34ₐ der Fig. 12 bis 14 weist nur an einer Stirnseite des Kopfstreifens 38 einen vorspringenden Bereich der Fußplatte 36ₐ auf und damit nur eine Stufenfläche 35. Diese ist mit einem Schraubloch 48 zur Aufnahme der Inbus-Schraube 62 des aufzusetzenden Schraubelements 50, 50ₐ ausgestattet. Der Verbindungsvorgang erfolgt in der oben beschriebenen Weise durch Drehen der Stufenfläche 35 unter die Unterfläche 19 einer Formrippe 18 sowie anschließendes Aneinanderpressen beider Flächen 19, 35.

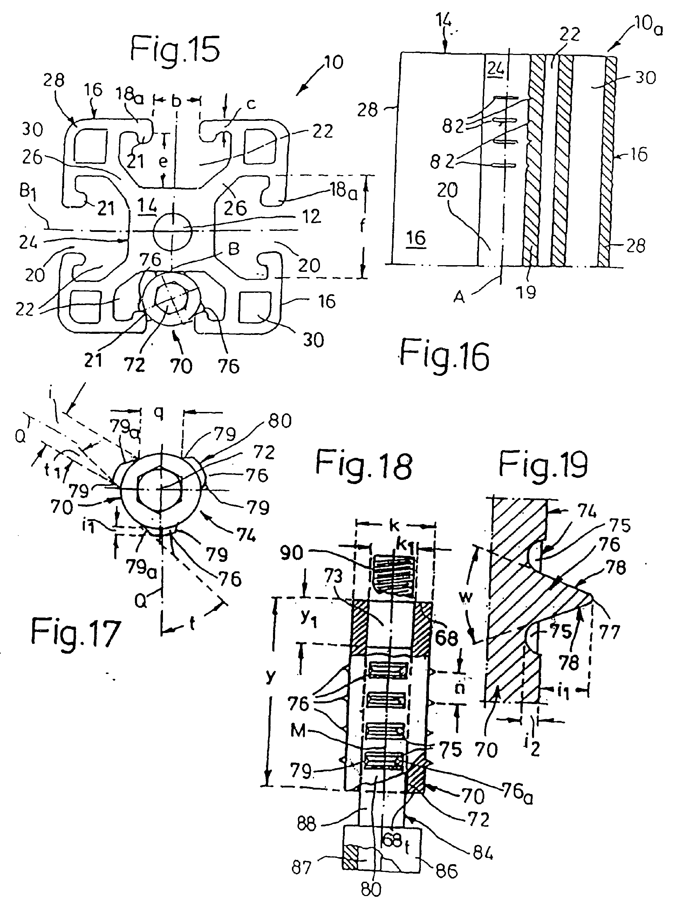

Das Hohlprofil 10ₐ der Fig. 15, 16 weist beidseits der Längsnuten 20 querschnittlich hakenförmige Formrippen 18ₐ auf. Die Hakenenden 21 der Formrippen 18ₐ sind zum Nutentiefsten 24 des hinterschnittenen Nutenraumes 22 gerichtet. Die Eckkanäle 30 sind hier von nahezu quadratischem Querschnitt.

In dem in Fig. 15 unten liegenden Hinterschneidungsraum 22 ist eine Hülse 70 mit zylindrischem Innenraum 72 zu erkennen, von deren Umfangsfläche 74 radiale Außenrippen 76 der Frontbreite i von 5 mm abragen; diese bilden -- jeweils im Umfangsabstand q zueinander -- drei parallel zur Mittelachse M der Hülse 70 verlaufende Kragreihen 80, deren jede hier vier Außenrippen 76 enthält. Jener Innenraum 72 der Hülse 70 -- einer Länge y von 25 mm sowie des Außendurchmessers k von 10,2 mm und des Innendurchmessers k₁ von 6,0 mm -- geht am oberen Hülsenende in einen Sechskantbereich 73 axialer Länge y₁ von 6 mm über. Von der Umfangsfläche 74 der Hülse 70 ragen im Bereich des zylindrischen Bereiches des Hülsenraumes 72 -- in axialen mittleren Abständen n von etwa 4 mm voneinander -- die erwähnten Außenrippen 76 mit einer Kragweite i₁ von etwa 1 mm ab.

Gemäß Fig. 19 ist der achsparallele Schnitt der Außenrippen 76 dreiecksförmig; die beiden von der Rippenspitze 77 ausgehenden Rippenflächen 78 bestimmen einen Querschnittswinkel w von nahezu 45°. Diese Rippenflächen 78 gehen jeweils in eine in die Umfangsfläche 74 eingeformte Rinne 75 der Tiefe i₂ von 0,3 mm über. Die beiden Seitenkanten 79, 79ₐ jeder der -- in drei achsparallelen Kragreihen oder Gruppen 80 gleichen Umfangsabstandes q angeordneten -- Außenrippen 76 sind gemäß Fig. 17 von der Umfangsfläche 74 weg in unterschiedlichen Winkeln t bzw. t₁ von 15° bzw. etwa 45° zu einer die Außenrippe 76 mittig querenden Radiallinie Q geneigt; die Seitenkante 79 kann auch einen noch geringen Winkel t₁ bestimmen. Die angestauchte Seitenkante 79ₐ verursacht einen größeren Berührungswiderstand beim Drehen der Hülse 70, den die Bedienungsperson beim Drehen registriert und die Drehung beendet. Im übrigen entspricht die Länge jenes Umfangsabstandes q etwa jener der Frontbreite i der Außenrippen 76.

Die Außenrippen 76 werden in Radialnuten 82 des Nutentiefsten 24 und der Hakenenden 21 drehend eingesetzt und ermöglichen einen festen Sitz der Hülse 70 im Hohlprofil 10ₐ.

In den Hülsenraum 72, 73 kann eine Spannschraube 84 eingebettet werden, deren Schraubenkopf 86 ein Sechskantloch 87 für einen -- nicht dargestellten -- INBUS-Schlüssel anbietet, wobei der Schraubenkopf 86 in Spannstellung dem unteren Hülsenrand 68ₜ anliegt. An den Schraubenkopf 86 schließt ein Rundschaft 88 an, der in einen Schraubschaft 90 als Gewindebereich übergeht. Dieser überragt in Fig. 18 den oberen Hülsenrand 68.

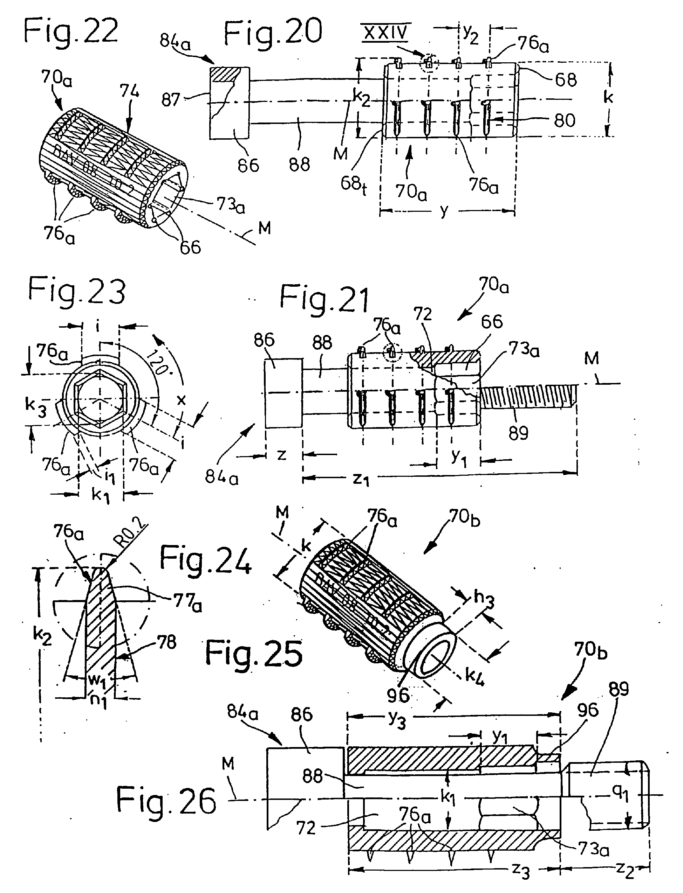

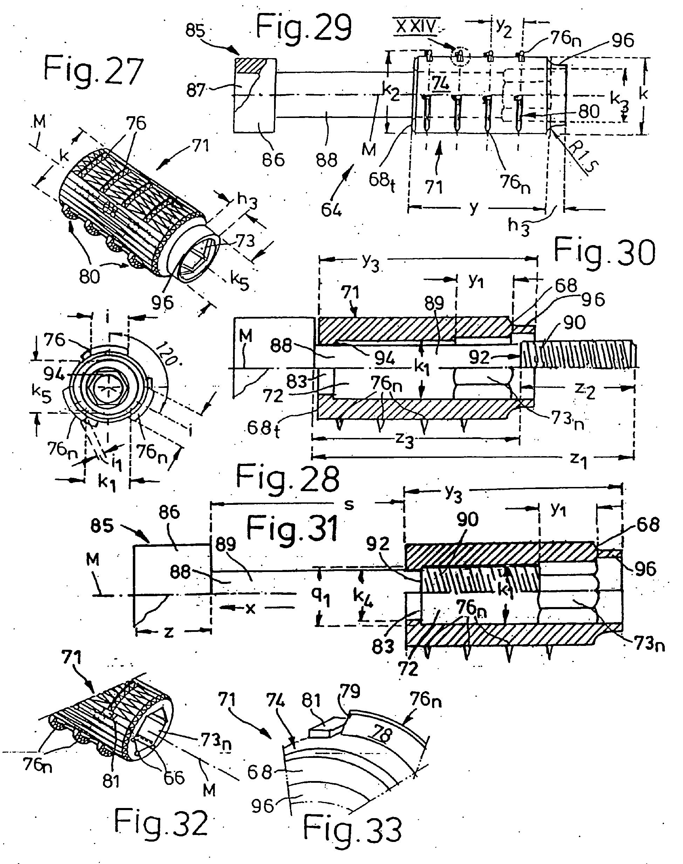

Jeweils eine andere Einheit aus einer Hülse 70ₐ bzw. 71der Länge y von hier 18 mm bzw. 20,5 mm sowie eines Außendurchmessers k von 10,2 mm -- und einer in sie eingeführten Spannschraube 84ₐ bzw. 85 zeigen die Fig. 20 bis 24 bzw. 27 bis 31 als Verbindungsorgan 64. Die Hülse 70ₐ bzw. 71 weist ebenfalls drei Gruppen oder Kragreihen 80 von jeweils vier Außenrippen 76ₐ bzw. 76ₙ auf, die einen Außendurchmesser k₂ von 12 mm bestimmen und deren Rippenspitze 77 sich gemäß Fig. 24 von einer Rippendicke n₁ von etwa 0,8 mm in einem Winkel w₁ von 30° querschnittlich verjüngt. Die an die Rippenspitze 77ₙ anschließenden seitlichen Rippenflächen 78 verlaufen parallel und geneigt zueinander. Besonders Fig. 33 zeigt, dass einer der Seitenkanten 79 der Außenrippe 76ₙ ein tellerartiger, flach quaderförmiger Körper 81 geringer Höhe zugeordnet ist. Im übrigen beträgt der axiale Abstand y₂ der Außenrippen 76ₐ bzw. 76ₙ voneinander hier 4 mm.

Die Hülse 70ₐ bzw. 71 bietet einen zylindrischen Hülsenraum 72 des inneren Durchmessers k₁ von 6 mm an, der in einen Sechskantbereich 73ₐ bzw. 73ₙ der axialen Länge y₁ von 6 mm übergeht. In dessen sechs Ecken verlaufen hier achsparallele Kerbrinnen 66, wie Fig. 26 verdeutlicht. Der so entstehende äußere Innendurchmesser k₃ des Sechskantbereichs 73ₐ bzw. 73ₙ misst 6,9 mm.

Die Spannschraube 84ₐ bzw. 85 besteht hier im Einbauzustand aus einem Schraubenkopf 86 der Axiallänge z von 6 mm -- mit stirnwärtigem Sechskantloch 87 für einen nicht gezeigten INBUS-Schlüssel -- und einem durchgehenden Rundschaft 88 der Länge z₁ von hier 29 oder 30 mm; das Gewinde 89 bzw. 90 wird in den Schaft 88 in einer Länge z₂ von 9 mm -- bevorzugt durch Rollformen -- erst dann eingeschnitten, nachdem die Hülse 70ₐ bzw. 71 bis zum Anschlagen an den Schraubenkopf 86 auf den Rundschaft 88 aufgeschoben worden ist. Der Abstand des Gewindes 89 vom Schraubenkopf 86 bzw. der Abstand einer den Schaft 88 gemäß Fig. 30 umfangenden Ringkante 92 des Gewindes 90 vom Schraubenkopf 86 -- und damit die Länge eines Rundabschnittes 88ᵣ des Schaftes 88 -- ist mit z₃ bezeichnet und misst hier 20 mm. Diese Ringkante 92 schlägt beim axialen Verschieben der Spannschraube 85 in Montage- oder Zugrichtung x der Fig. 31 an der Innenfläche der Rückwand 94 der Hülse 71 an, was eine Entnahme der Spannschraube 86 aus der Hülse 71 verhindert. Die Rückwand 94 enthält einen Durchbruch 83 für den Rundschaft 88.

In Fig. 21 ist aus Gründen der Übersichtlichkeit die Hülse 70ₐ bereits wieder etwas vom Schraubenkopf 86 entfernt dargestellt; die Spannschraube 86 kann nach dem Aufbringen des Gewindes 89 axial in der Hülse 70ₐ verschoben, aber dank des Gewindes 89 nicht gänzlich entfernt werden; dessen Außendurchmesser q₁ ist größer als der angrenzende Innendurchmesser k₁ des Hülseninnenraumes 72.

Die Hülse 70_{b} bzw. 71 der Fig. 25 bis 27 unterscheidet sich von der Hülse 70ₐ nach Fig. 22 durch einen einends angeformten Kragen 96 der Höhe h₃ von beispielsweise 2 mm, dessen Außendurchmesser k₄ mit 8 mm kürzer ist als der Außendurchmesser k der Hülse 70_{b} von 10,2 mm. Dieser Kragen 96 vergrößert die axiale Kontaktlänge g₃ der Hülse 70_{b} mit der Spannschraube 84 auf hier 20,5 mm. Deren Gewinde 89 verläuft erkennbar außerhalb der Hülse 70_{b}.

Auch in Fig. 31 ist der Übersichtlichkeit halber die Spannschraube 85 in ihrer inneren Anschlagstellung an der Hülse 71 skizziert; letztere ist bereits wieder in einem Abstand s von etwa 20 mm vom Schraubenkopf 86 entfernt. Die Spannschraube 85 kann nach dem Aufbringen des Gewindes 90 axial in der Hülse 71 verschoben, aber dank des Gewindes 90 und seiner Ringkante 92 nicht gänzlich entfernt werden; dessen Außendurchmeser q₁ ist -- wie gesagt -- größer als der Durchmesser k₄ jenes Durchbruchs 83.

An dem jener Rückwand 94 fernen Ende der Hülse 71 ist ebenfalls ein Kragen 96 der Höhe h₃ von beispielsweise 2 mm angeformt, dessen Außendurchmesser k₅ mit 8 mm kürzer ist als der Außendurchmesser k der Hülse 71 von 10,2 mm. Dieser Kragen 96 begrenzt gemäß Fig. 30, 31, 33 einerseits eine Ringzone 68 als Hülsenkante, die anderseits von der Umgangsfläche 74 der Hülse 71 begrenzt ist; mit dieser Ringzone 68 als Hülsenkante ist der Kragen 96 einstückig hergestellt. Dieser Kragen 96 vergrößert die axiale Kontaktlänge y₃ der Hülse 71 mit der Spannschraube 85 auf hier 20,5 mm.

## Patentansprüche

1. Anschlussverbindungsanordnung eines einen Profilkanal (12) sowie zumindest einen hinterschnittenen Nutenraum (22) an einer Längsnut (20) aufweisenden ersten strangartigen Hohlprofils (10) an ein anderes Werkstück mittels eines Schraubelementes od. dgl. Verbindungsorganes (50, 50ₐ, 50ₙ), wobei an dem Hohlprofil (10), ein streifenartiges Sockelprofil (34) festgelegt ist,
**dadurch gekennzeichnet,**
**dass** das Sockelprofil (34) radial zum Profilkanal (12) verläuft und zumindest einends eine Stufenfläche (35) zur Aufnahme des Schraubelementes (50, 50ₐ) aufweist, welches in Ruhelage innerhalb der Seitenkonturen des Sockelprofils liegt sowie dieses in Anschlussstellung zumindest an einer Seite überragt und in den Hinterschneidungsraum (24) des anderen Hohlprofils (10) haltend eingreift.

2. Anordnung nach Anspruch 1, **dadurch gekennzeichnet, dass** das Sockelprofil (34) an der Stirnfläche (14) des Hohlprofils (10) festgelegt ist.

3. Anordnung nach Anspruch 1 oder 2, **dadurch gekennzeichnet, dass** das Sockelprofil (34) eine Fußplatte (36) an einem Kopfstreifen (38) geringerer Längsschnittlänge (g₁) als die Länge (g) der Fußplatte aufweist und ein Teil von letzterer die Stirnseite/n (39) des Kopfstreifens unter Bildung einer Ober- oder Stufenfläche (35) überragt.

4. Anordnung nach einem der Ansprüche 1 bis 3, **dadurch gekennzeichnet, dass** das Schraubelement (50, 50ₐ) einen in Draufsicht i.w. rechteckigen Sockelstreifen (52) aufweist, von dessen Oberfläche (51) eine Schraub- oder Sockelhülse (54) für eine sie axial durchsetzende Schraube (63) aufragt.

5. Anordnung nach Anspruch 4, **dadurch gekennzeichnet, dass** die Außenkontur der Schraub- oder Sockelhülse (54) zwei diagonal zu ihrem Innenraum (54) angeordnete Eckkanten (56) aufweist, von denen jeweils beidseits eine ebene Wandfläche (55) als Teil der Hülsenwand (59) ausgeht, wobei gegebenenfalls die ebene Wandfläche in einen querschnittlich gekrümmten Bogenbereich (58) der Hülsenwand (59) übergeht.

6. Anordnung nach Anspruch 4 oder 5, **dadurch gekennzeichnet, dass** der Sockelstreifen (52) in seiner Längsachse (E) die Hülsenwand (59) überragt, wobei gegebenenfalls zumindest ein Eckbereich (53) des Sockelstreifens (52) in Draufsicht teilkreisförmig ausgebildet ist.

7. Anordnung nach Anspruch 4 und 6, **dadurch gekennzeichnet, dass** der Eckkante (56) der Hülsenwand (59) ein gerundeter Eckbereich (53) des Sockelstreifens (52) zugeordnet ist (Fig. 9).

8. Anordnung nach Anspruch 4 oder 7, **dadurch gekennzeichnet, dass** die Eckkante (56) der Schraub- oder Sockelhülse (54) von einer Längskante (56) des Sockelstreifens (52) ausgeht.

9. Anordnung nach einem der Ansprüche 1 bis 8, **dadurch gekennzeichnet, dass** das Sockelprofil (34, 34ₐ) von einem etwa zentrisch in seinem Kopfstreifen (38) angeordneten Durchbruch (42) für ein Schrauborgan (44) durchsetzt ist, wobei gegebenenfalls das Schrauborgan (44) im Profilkanal (12) des Hohlprofils (10) nahe dessen Stirnfläche (14) festlegbar ist.

10. Anordnung nach Anspruch 1 oder 9, **dadurch gekennzeichnet, dass** die Ober- oder Stufenfläche/n (35) des Sockelprofils (34, 34ₐ) in einem Abstand zur Stirnfläche (14) des Hohlprofils (10) verläuft/verlaufen, welcher der Höhe (h₁) der Stirnseite (39) des Kopfstreifens (38) entspricht bzw. der Summe aus der Dicke (c) den Hinterschneidungsraum (24) übergreifender, die Längsnut (20) begrenzender Formrippen (18) sowie der Dicke (c₁) des Sockelstreifens (52).

11. Anordnung nach einem der Ansprüche 1 bis 10, **dadurch gekennzeichnet, dass** die Längsachse (F) des Sockelstreifens (52) des Schrauborgans (50, 50ₐ) in Einschublage parallel zur Längsachse (A) des Hohlprofils (10) verläuft und der Sockelstreifen in der Längsnut (20) verfahrbar angeordnet ist.

12. Anordnung nach einem der Ansprüche 1 bis 11, **dadurch gekennzeichnet, dass** zum Verbinden beider Hohlprofile (10) die Schrauborgane (50, 50ₐ) in Anschlusstellung den Hinterschneidungsraum (24) des einen Hohlprofils (10) übergreifende Formrippen (18) jeweils von deren Sockelstreifen (52) untergriffen sind, wodurch die Formrippen des einen Hohlprofils an der Stirnfläche (14) des anderen Hohlprofils anliegend gehalten sind, und dass gegebenenfalls in Anschlussstellung die Längsachse (F) des Sockelstreifens (52) quer zur Längsachse (A) des zugeordneten Hohlprofils (10) steht.

13. Anordnung nach einem der Ansprüche 1 bis 12, **gekennzeichnet durch** eine in die Längsnut (20) einsetzbare Hülse (70, 70ₐ, 70_{b}) mit seitlichen Außenrippen (76, 76ₐ, 76ₙ) die in Radialnuten (82) des Hohlprofils (10) einsetzbar ausgebildet sind (Fig. 15), wobei gegebenenfalls der Hülse (70, 70ₐ, 70_{b}) eine in ihren Innenraum (72) einsetzbare Spannschraube (84, 84ₐ) zugeordnet ist.

14. Anordnung nach einem der Ansprüche 1 bis 13, **dadurch gekennzeichnet, dass** ein Längsabschnitt (73) des Innenraumes (72) der Hülse (70, 70ₐ, 70_{b}) als ein Mehrkantquerschnitt, insbesondere als ein Sechskantquerschnitt, ausgebildet ist und an einen zylindrischen Innenraumabschnitt anschließt.

15. Anordnung nach Anspruch 13 oder 14, **dadurch gekennzeichnet, dass** die zumindest in ihrem freien Endbereich querschnittlich etwa dreiecksförmige Außenrippe (76, 76ₐ) mit ihren Rippenflächen (78) in Formrinnen (75) der Hülsenumfangsfläche (74) übergeht und/oder, dass die beiden Rippenflächen (78) in eine Rippenspitze (77, 77ₐ) übergehen, die bevorzugt als Schneide ausgebildet ist.

16. Anordnung nach einem der Ansprüche 13 bis 15, **dadurch gekennzeichnet, dass** die Außenrippe (76, 76ₐ, 76ₙ) einends eine Seitenkante (79ₐ) aufweist, die mit einer etwa durch die Mitte der Außenrippe gelegten Radiallinie (Q) einen Winkel (t) von etwa 45° bildet, wobei gegebenenfalls die Außenrippe (76, 76ₐ) an ihrer geneigten Seitenkante (79ₐ) angestaucht ist.

17. Anordnung nach einem der Ansprüche 13 bis 16, **gekennzeichnet durch** zumindest drei zur Mittelachse (M) der Hülse (70, 70ₐ, 70_{b}) parallele Gruppen (80) von Außenrippen (76, 76ₐ, 76ₙ) die in Befestigungslage Radialnuten (82) zugeordnet sind, wobei gegebenenfalls die Radialnuten (82) im Nutentiefsten (24) der Längsnut (20) des Hohlprofils (10) sowie in zueinander weisenden Flächen von die Längsnut an der Profilseitenfläche (16) begrenzenden Formrippen (18) angebracht sind.

18. Anordnung nach Anspruch 16 und 17, **dadurch gekennzeichnet, dass** die Seitenkanten (79ₐ) einer Gruppe (80) von Außenrippen (82) parallel zur Mittelachse (M) miteinander fluchten und/oder dass die geneigte Seitenkante (79ₐ) der Außenrippe (82) einen Berührungswiderstand zwischen der Hülse (70, 70ₐ, 70_{b}) sowie den zugeordneten Radialnuten (82) bildet.

19. Anordnung nach wenigstens einem der voraufgehenden Ansprüche mit eine in die Längsnut (20) eingesetzten Hülse (70, 70ₐ, 70_{b}, die mit von ihrer Umfangsfläche (74) abragenden in Radialnuten (82) des Hohlprofils (10) einsetzbaren seitlichen Außenrippen (76, 76ₐ, 76ₙ) versehen ist, **dadurch gekennzeichnet, dass** der Hülse (70, 70ₐ, 70_{b}) einer in ihren Innenraum (72) einsetzbare Spannschraube (84, 85) zugeordnet ist, an deren Schraubenkopf (86) ein Rundschaft (88) angeformt ist, wobei der Rundschaft (88) in Abstand (z₃) zum Schraubenkopf (86) in einen koaxialen Schraubschaft (90) übergeht.

20. Anordnung nach Anspruch 19, **dadurch gekennzeichnet, dass** der Außendurchmesser (q₁) des Gewindes (89) bzw. des Schraubschaftes (90) größer ist als der Innendurchmesser (k₁) des Hülseninnenraumes (72).

21. Anordnung nach Anspruch 19, **dadurch gekennzeichnet, dass** der Innenraum (72) der Hülse (70ₐ, 70_{b}) einen zylindrischen Abschnitt aufweist, an den ein Mehrkantquerschnitt (73ₐ) anschließt, dessen achsparallele Kanten als Kerbrinnen (66) ausgebildet sind.

22. Anordnung nach Anspruch 19, **dadurch gekennzeichnet, dass** an den Schraubenkopf (86) der Spannschraube (85) ein Schaft (88) angeformt ist, der in Abstand (z₃) zum Schraubenkopf mit dem Gewinde (90) versehen ist.

23. Anordnung nach Anspruch 22, **dadurch gekennzeichnet, dass** sich zwischen dem Schraubenkopf (86) und dem Gewinde (90) ein Rundabschnitt (89) des Schaftes (88) erstreckt, dessen Länge (z₃) etwa zwei Dritteln der Länge (z₁) des Schaftes entspricht.

24. Anordnung nach Anspruch 22 oder 23, **dadurch gekennzeichnet, dass** der Außendurchmesser (q₁) des Gewindes (90) größer ist als der Durchmesser (k₄) eines Durchbruches (83) in einer den Hülseninnenraum (72) begrenzenden und vom Schaft (88) durchsetzten Rückwand (94) der Hülse (71).

25. Anordnung nach Anspruch 24, **dadurch gekennzeichnet, dass** das Gewinde (90) am Schaft (88) eine zum Schraubenkopf (86) weisende Ringkante (92) der Spannschraube (85) als Anschlagorgan bildet, dessen Partner die ringförmige Rückwand (94) der Hülse (71) ist, wobei gegebenenfalls die Spannschraube (85) zwischen ihrem Schraubenkopf (86) und der Ringkante (92) in der Hülse (71) axial verschiebbar angeordnet ist.

26. Anordnung nach einem der Ansprüche 22 bis 25, **dadurch gekennzeichnet, dass** bei Anschlag des Schraubenkopfes (86) der Spannschraube (85) am zugeordneten, äußeren Hülsenrand (68ₜ) der Hülse (71) das Gewinde (90) andernends aus der Hülse (71) ragt und/oder, dass ein Längsabschnitt des Innenraumes (72) der Hülse (71) als ein Mehrkantquerschnitt (73ₙ), insbesondere als ein Sechskantquerschnitt, ausgebildet ist und an einen zylindrischen Abschnitt des Hülseninnenraumes (72) anschließt, wobei die achsparallelen Kanten des Mehrkantquerschnittes (73ₙ) bevorzugt als Kerbrinnen (66) ausgebildet sind.

27. Anordnung nach einem der Ansprüche 24 bis 26, **dadurch gekennzeichnet, dass** an die Hülse (71) an ihrem der Rückwand (94) fernen Ende ein axialer Kragen (96) angeformt und innerhalb dessen der Schaft (88) verschieblich angeordnet ist.

28. Anordnung nach einem der Ansprüche 24 bis 27, **dadurch gekennzeichnet, dass** der Kragen (96) mit der Umfangsfläche (74) der Hülse (71) eine Ringzone (68) der Hülse (71) begrenzt und/oder die Höhe (h₃) des Kragens (96) die Kontaktlänge (y₃) zwischen Hülse (71) und Spannschraube (85) von bevorzugt etwa 20,5 mm verlängert.

29. Anordnung nach einem der Ansprüche 13 bis 28, **dadurch gekennzeichnet, dass** die zumindest in ihrem freien Endbereich querschnittlich etwa dreiecksförmige Außenrippe (76, 76ₐ, 76ₙ) mit ihren seitlichen Rippenflächen (78) in Formrinnen (75) der Hülsenumfangsfläche (74) übergeht, wobei gegebenenfalls die beiden Rippenflächen (78) in eine Rippenspitze (77ₙ) übergehen, die bevorzugt als Schneide ausgebildet ist.

30. Anordnung nach einem der Ansprüche 13 bis 22, **dadurch gekennzeichnet, dass** die Außenrippe (76, 76ₐ, 76ₙ) einends eine Seitenkante (79ₐ) aufweist, die mit einer etwa durch die Mitte der Außenrippe gelegten Radiallinie (Q) einen Winkel (t) von etwa 45° bildet, wobei gegebenenfalls die Außenrippe (76, 76ₐ, 76ₙ) an ihrer geneigten Seitenkante (79ₐ) angestaucht ist.

31. Anordnung nach einem der Ansprüche 13 bis 30, **gekennzeichnet durch** einen tellerartigen, flach quaderförmigen Körper (81) an einer Seitenkante (79) der Außenrippe (76ₙ), wobei gegebenenfalls der tellerartige Körper (81) die Außenrippen (76ₙ) an deren dem Kragen (96) fernen Rippenfläche (78) axial übergreift und/oder die geneigte Seitenkante (79ₐ) der Außenrippe (76, 76ₐ, 76ₙ) einen Berührungswiderstand zwischen der Hülse (70, 70ₐ, 70ₙ) und den zugeordneten Radialnuten (82) bildet.

32. Anordnung nach einem der Ansprüche 13 bis 31, **gekennzeichnet durch** zumindest drei zur Mittelachse (M) der Hülse (71) parallele Gruppen (80) von Außenrippen (76, 76ₐ, 76ₙ) die in Befestigungslage Radialnuten (82) zugeordnet sind, wobei gegebenenfalls die Seitenkanten (79, 79ₐ) einer Gruppe (80) von Außenrippen (76, 76ₐ, 76ₙ) parallel zur Mittelachse (M) miteinander fluchten.

33. Anordnung nach Anspruch 32, **dadurch gekennzeichnet, dass** die Radialnuten (82) im Nutentiefsten (24) der Längsnut (20) des Hohlprofils (10) sowie in zueinander weisenden Flächen von die Längsnut an der Profilseitenfläche (16) begrenzenden Formrippen (18) angebracht sind.

## Claims

1. Connecting assembly for the connection of a first continuous hollow profile (10) having a profile channel (12) and at least one undercut groove space (22) in a longitudinal groove (20), to another work piece by means of a screw element or the like connecting member (50, 50ₐ, 50ₙ), a strip-like base profile (34) being fixed to the hollow profile (10),
**characterised in that**
the base profile (34) runs radially to the profile channel (12) and at least at one end has a stepped surface (35) for receiving the screw element (50, 50ₐ) which in the inoperative position is located within the side contours of the base profile and protrudes beyond the latter on at least one side in the connecting position and engages in retaining relationship in the undercut space (24) of the other hollow profile (10).

2. Assembly according to claim 1, **characterised in that** the base profile (34) is fixed to the end face (14) of the hollow profile (10).

3. Assembly according to claim 1 or 2, **characterised in that** the base profile (34) has a bottom plate (36) on a head strip (38) having a shorter longitudinal-section length (g₁) than the length (g) of the bottom plate, and a portion of the latter protrudes beyond the end(s) (39) of the head strip, forming an upper or stepped surface (35).

4. Assembly according to any of claims 1 to 3, **characterised in that** the screw element (50, 50ₐ) has a base strip (52) which is substantially rectangular in plan view and from the upper surface (51) of which a screw or base sleeve (54) for a screw (63) passing through it axially extends upwards.

5. Assembly according to claim 4, **characterised in that** the outer contour of the screw or base sleeve (54) has two corner edges (56) which are arranged diagonally to its interior (54) and from which on either side a flat wall surface (55) extends as part of the sleeve wall (59), if occasion arises the flat wall surface merging with a cross-sectionally curved arc region (58) of the sleeve wall (59).

6. Assembly according to claim 4 or 5, **characterised in that** the base strip (52) in its longitudinal axis (E) protrudes beyond the sleeve wall (59), if occasion arises at least one corner region (53) of the base strip (52) being arcuate in plan view.

7. Assembly according to claims 4 and 6, **characterised in that** associated with the corner edge (56) of the sleeve wall (59) is a rounded corner region (53) of the base strip (52) (Fig. 9).

8. Assembly according to claim 4 or 7, **characterised in that** the corner edge (56) of the screw or base sleeve (54) extends from a longitudinal edge (56) of the base strip (52).

9. Assembly according to any of claims 1 to 8, **characterised in that** through the base profile (34, 34ₐ) passes an aperture (42) for a screw member (44) arranged approximately centrally in its head strip (38), if occasion arises the screw member (44) being capable of being fixed in the profile channel (12) of the hollow profile (10) close to its end face (14).

10. Assembly according to claim 1 or 9, **characterised in that** the upper or stepped surface(s) (35) of the base profile (34, 34ₐ) run(s) at a distance from the end face (14) of the hollow profile (10) which corresponds to the height (h₁) of the end (39) of the head strip (38) or to the sum of the thickness (c) of shaped ribs (18) overlapping the undercut space (24) and defining the longitudinal groove (20) and the thickness (c₁) of the base strip (52).

11. Assembly according to any of claims 1 to 10, **characterised in that** the longitudinal axis (F) of the base strip (52) of the screw member (50, 50ₐ) in the inserted position runs parallel to the longitudinal axis (A) of the hollow profile (10), and the base strip is arranged movably in the longitudinal groove (20).

12. Assembly according to any of claims 1 to 11, **characterised in that**, for connecting the two hollow profiles (10), under the screw members (50, 50ₐ) in the connecting position of shaped ribs (18) overlapping the undercut space (24) of one hollow profile (10) are passed in each case their base strips (52), so that the shaped ribs of one hollow profile are held in contact with the end face (14) of the other hollow profile, and **in that** if occasion arises in the connecting position the longitudinal axis (F) of the base strip (52) stands transversely to the longitudinal axis (A) of the associated hollow profile (10).

13. Assembly according to any of claims 1 to 12, **characterised by** a sleeve (70, 70ₐ, 70_{b}) which can be inserted in the longitudinal groove (20) and has lateral outer ribs (76, 76ₐ, 76ₙ) which can be inserted in radial grooves (82) of the hollow profile (10) (Fig. 15), if occasion arises the sleeve (70, 70ₐ, 70_{b}) having an associated set screw (84, 84ₐ) which can be inserted in its interior (72).

14. Assembly according to any of claims 1 to 13, **characterised in that** a longitudinal section (73) of the interior (72) of the sleeve (70, 70ₐ, 70_{b}) is designed as a polygon cross-section, in particular as a hexagon cross-section, and adjoins a cylindrical interior section.

15. Assembly according to claim 13 or 14, **characterised in that** the outer rib (76, 76ₐ), which is approximately triangular in cross-section at least in its free end region, merges by its rib surfaces (78) with shaped channels (75) of the peripheral surface (74) of the sleeve and/or **in that** the two rib surfaces (78) merge with a rib peak (77, 77ₐ) which is preferably designed as a cutting edge.

16. Assembly according to any of claims 13 to 15, **characterised in that** the outer rib (76, 76ₐ, 76ₙ) has at one end a side edge (79ₐ) which forms an angle (t) of about 45° with a radial line (Q) passing approximately through the centre of the outer rib, if occasion arises the outer rib (76, 76ₐ) being upset at its inclined side edge (79ₐ).

17. Assembly according to any of claims 13 to 16, **characterised by** at least three groups (80) of outer ribs (76, 76ₐ, 76ₙ) which are parallel to the centre axis (M) of the sleeve (70, 70ₐ, 70_{b}) and which in the fastening position are associated with radial grooves (82), if occasion arises the radial grooves (82) being mounted in the groove bottom (24) of the longitudinal groove (20) of the hollow profile (10) as well as in facing surfaces of shaped ribs (18) which define the longitudinal groove at the side surface (16) of the profile.

18. Assembly according to claims 16 and 17, **characterised in that** the side edges (79ₐ) of a group (80) of outer ribs (82) are aligned with each other parallel to the centre axis (M) and/or **in that** the inclined side edge (79ₐ) of the outer rib (82) forms a contact resistance between the sleeve (70, 70ₐ, 70_{b}) and the associated radial grooves (82).

19. Assembly according to one or more of the preceding claims, having a sleeve (70, 70ₐ, 70_{b}) which is inserted in the longitudinal groove (20) and provided with lateral outer ribs (76, 76ₐ, 76ₙ) which project from its peripheral surface (74) and can be inserted in radial grooves (82) of the hollow profile (10), **characterised in that** associated with the sleeve (70, 70ₐ, 70_{b}) is a set screw (84, 85) which can be inserted in its interior (72) and on the screw head (86) of which is integrally formed a round shank (88), the round shank (88) merging with a coaxial screw shank (90) at a distance (z₃) from the screw head (86).

20. Assembly according to claim 19, **characterised in that** the outside diameter (q₁) of the thread (89) or of the screw shank (90) is larger than the inside diameter (k₁) of the sleeve interior (72).

21. Assembly according to claim 19, **characterised in that** the interior (72) of the sleeve (70ₐ, 70_{b}) has a cylindrical section which is adjoined by a polygon cross-section (73ₐ) of which the parallel-axis edges are designed as notched channels (66).

22. Assembly according to claim 19, **characterised in that** on the screw head (86) of the set screw (85) is integrally formed a shank (88) which is provided with the thread (90) at a distance (z₃) from the screw head.

23. Assembly according to claim 22, **characterised in that** between the screw head (86) and the thread (90) extends a round section (89) of the shank (88), of which the length (z₃) corresponds to about two-thirds of the length (z₁) of the shank.

24. Assembly according to claim 22 or 23, **characterised in that** the outside diameter (q₁) of the thread (90) is larger than the diameter (k₄) of an aperture (83) in a rear wall (94) of the sleeve (71), which rear wall (94) defines the sleeve interior (72) and has the shank (88) passing through it.

25. Assembly according to claim 24, **characterised in that** the thread (90) on the shank (88) forms an annular edge (92) of the set screw (85) facing towards the screw head (86), as a stop member of which the companion part is the annular rear wall (94) of the sleeve (71), if occasion arises the set screw (85) being arranged axially slidably in the sleeve (71) between its screw head (86) and the annular edge (92).

26. Assembly according to any of claims 22 to 25, **characterised in that**, when the screw head (86) of the set screw (85) abuts against the associated, outer sleeve edge (68ₜ) of the sleeve (71), the thread (90) extends at the other end out of the sleeve (71) and/or in that a longitudinal section of the interior (72) of the sleeve (71) is designed as a polygon cross-section (73ₙ), in particular as a hexagon cross-section, and adjoins a cylindrical section of the sleeve interior (72), the parallel-axis edges of the polygon cross-section (73ₙ) preferably being designed as notched channels (66).

27. Assembly according to any of claims 24 to 26, **characterised in that** on the sleeve (71), at its end remote from the rear wall (94), is integrally formed an axial collar (96) within which the shank (88) is arranged slidably.

28. Assembly according to any of claims 24 to 27, **characterised in that** the collar (96) with the peripheral surface (74) of the sleeve (71) defines an annular zone (68) of the sleeve (71) and/or the height (h₃) of the collar (96) lengthens the contact length (y₃) between sleeve (71) and set screw (85) preferably by about 20.5 mm.

29. Assembly according to any of claims 13 to 28, **characterised in that** the outer rib (76, 76ₐ, 76ₙ), which is approximately triangular in cross-section at least in its free end region, with its lateral rib surfaces (78) merges with shaped channels (75) in the peripheral surface (74) of the sleeve, if occasion arises the two rib surfaces (78) merging with a rib apex (77ₙ) which is preferably designed as a cutting edge.

30. Assembly according to any of claims 13 to 22, **characterised in that** the outer rib (76, 76ₐ, 76ₙ) at one end has a side edge (79ₐ) which forms an angle (t) of about 45° with a radial line (Q) passing approximately through the centre of the outer rib, if occasion arises the outer rib (76, 76ₐ, 76ₙ) being upset at its inclined side edge (79ₐ).

31. Assembly according to any of claims 13 to 30, **characterised by** a plate-like, flat-cuboid body (81) at a side edge (79) of the outer rib (76ₙ), if occasion arises the plate-like body (81) axially overlapping the outer ribs (76ₙ) at their rib surface (78) remote from the collar (96) and/or the inclined side edge (79ₐ) of the outer rib (76, 76ₐ, 76ₙ) forming a contact resistance between the sleeve (70, 70ₐ, 70ₙ) and the associated radial grooves (82).

32. Assembly according to any of claims 13 to 31, **characterised by** at least three groups (80) of outer ribs (76, 76ₐ, 76ₙ) which are parallel to the centre axis (M) of the sleeve (71) and which in the fastening position are associated with radial grooves (82), if occasion arises the side edges (79, 79ₐ) of outer ribs (76, 76ₐ, 76ₙ) being aligned with each other parallel to the centre axis (M).

33. Assembly according to claim 32, **characterised in that** the radial grooves (82) are mounted in the groove bottom (24) of the longitudinal groove (20) of the hollow profile (10) as well as in facing surfaces of shaped ribs (18) which define the longitudinal groove at the side surface (16) of the profile.

## Revendications

1. Ensemble d'assemblage de raccordement d'un premier profilé creux (10) du genre boudin présentant un canal de profilé (12), ainsi que d'au moins un espace de rainure (22) muni d'une contre-dépouille, sur une rainure longitudinale (20), à une autre pièce d'oeuvre au moyen d'un élément fileté ou d'un organe de liaison (50, 50ₐ, 50ₙ) analogue, un profil de socle (34) du genre d'une bande étant fixé sur le profilé creux (10)
**caractérisé en ce que**
le profil de socle (34) s'étend radialement par rapport au canal de profilé (12) et présente au moins à une extrémité une surface en gradin (35) pour recevoir l'élément fileté (50, 50ₐ) qui, en position de repos, est situé à l'intérieur des contours latéraux du profil de socle ainsi que dépasse de celui-ci en position de raccordement, au moins en un côté, et s'engage, avec effet de maintien, sur l'espace à contre-dépouille (24) de l'autre profilé creux (10).

2. Ensemble selon la revendication 1, **caractérisé en ce que** le profil de socle (34) est fixé sur la face frontale (14) du profilé creux (10).

3. Ensemble selon la revendication 1 ou 2, **caractérisé en ce que** le profil de socle (34) présente une plaque de pied (36) sur une bande de tête (38) de plus petite longueur en coupe longitudinale (g₁) que la longueur (g) de la plaque de pied, et une partie de cette dernière dépasse de la ou des faces frontale(s) (39) de la bande de tête, en formant une surface supérieure ou de gradin (35).

4. Ensemble selon l'une des revendications 1 à 3, **caractérisé en ce que** l'élément fileté (50, 50ₐ) présente une bande de socle (52), essentiellement rectangulaire en vue de dessus, de la face supérieure (51) de laquelle s'élève une douille filetée ou à socle (54) pour une vis (63) la traversant axialement.

5. Ensemble selon la revendication 4, **caractérisé en ce que** le contour extérieur de la douille filetée ou à socle (54) présente deux arêtes d'angle (56) disposées en diagonale par rapport à son espace intérieur (54), de chacune d'elles, de part et d'autre, part une surface de paroi (55) plane en tant que partie de la paroi de douille (59), la face de paroi plane se transformant le cas échéant en une zone arquée (58) à courbure de section transversale de la paroi de douille (59).

6. Ensemble selon la revendication 4 ou 5, **caractérisé en ce que** la bande à socle (52) dépasse dans son axe longitudinal (E) de la paroi de socle (59), au moins une zone d'angle (53) de la bande à socle (52) étant le cas échéant réalisée en forme de cercle partiel en vue de dessus.

7. Ensemble selon les revendications 4 et 6, **caractérisé en ce qu'**à l'arête d'angle (56) de la paroi de douille (59) est associée une zone d'angle (53) arrondie de la bande à socle (52) (Fig. 9).

8. Ensemble selon la revendication 4 ou 7, **caractérisé en ce que** l'arête d'angle (56) de la douille filetée ou à socle (54) part d'une arête longitudinale (56) de la bande à socle (52).

9. Ensemble selon l'une des revendications 1 à 8, **caractérisé en ce que** le profil de socle (34, 34ₐ) est traversé par un passage (42), disposé à peu près centralement dans sa bande de tête (38), pour un organe fileté (44), l'organe fileté (44) étant le cas échéant est susceptible d'être fixé dans le canal de profilé (12) du profilé creux (10), à proximité de sa face frontale (14).

10. Ensemble selon la revendication 1 ou 9, **caractérisé en ce que** la ou les face(s) supérieure(s) ou de gradins (35) du profil de socle (34, 34ₐ) s'étend/s'étendent à une distance de la face frontale (14) du profilé creux (10), qui correspond à la hauteur (h₁) de la face frontale (39) de la bande de tête (38), ou à la somme formée de l'épaisseur (c), de nervures profilées (18) d'entourage, délimitant la rainure longitudinale (20), ainsi que de l'épaisseur (c₁) de la bande à socle (52).

11. Ensemble selon l'une des revendications 1 à 10, **caractérisé en ce que** l'axe longitudinal (F) de la bande à socle (52) de l'organe fileté (50, 50ₐ), à la position insérée, s'étend parallèlement à l'axe longitudinal (A) du profilé creux (10), et la bande à socle est disposée de façon déplaçable dans la rainure longitudinale (20).

12. Ensemble selon l'une des revendications 1 à 11, **caractérisé en ce que**, pour assurer la liaison des deux profilés creux (10), les organes filetés (50, 50ₐ) en position de raccordement saisissent par le dessous les nervures profilées (18) entourant l'espace à contre - dépouille (24) l'un profilé creux (10), chaque fois par leur bande à socle (52), faisant que les nervures profilées d'un profilé creux sont maintenues en appui sur la face frontale (14) de l'autre profilé creux, et **en ce que**, le cas échéant, en position de raccordement, l'axe longitudinal (F) de la bande à socle (52) est transversal à l'axe longitudinal (A) du profilé creux (10) associé.

13. Ensemble selon l'une des revendications 1 à 12, **caractérisé par** une douille (70, 70ₐ, 70_{b}) susceptible d'être insérée dans la rainure longitudinale (20), comprenant des nervures extérieures (76, 76ₐ, 76ₙ) latérales, réalisées de façon à pouvoir être insérées dans des rainures radiales (82) du profilé creux (10), , à la douille (70, 70ₐ, 70_{b}) étant le cas échéant associée une vis de serrage (84, 84ₐ) susceptible d'être insérée dans son espace intérieur (72).

14. Ensemble selon l'une des revendications 1 à 13, **caractérisé en ce qu'**un tronçon longitudinal (73) de l'espace intérieur (72) de la douille (70, 70ₐ, 70_{b}) est réalisé sous la forme d'une section transversale polygonale, en particulier d'une section transversale hexagonale, et se raccorde à un tronçon d'espacement intérieur cylindrique.

15. Ensemble selon la revendication 13 ou 14, **caractérisé en ce que** la nervure extérieure (76, 76ₐ), de section transversale à peu près de forme triangulaire au moins dans sa zone d'extrémité libre, avec ses faces de nervure (78) se transforme en des goulottes profilées (75) de la surface périphérique de douille (74), et/ou **en ce que** les deux faces de nervure (78) se transforment en une pointe de nervure (77, 77ₐ), réalisée de préférence sous la forme de tranchant.

16. Ensemble selon l'une des revendications 13 à 15, **caractérisé en ce que** la nervure extérieure (76, 76ₐ, 76ₙ) présente à une extrémité une arête latérale (79ₐ), qui, avec une ligne radiale (Q) placée à peu près au centre de la nervure extérieure, forme un angle (t) d'environ 45°, la nervure extérieure (76, 76ₐ) étant le cas échéant écrasée sur son arête latérale (79ₐ) inclinée.

17. Ensemble selon l'une des revendications 13 à 16, **caractérisé par** au moins trois groupes (80), parallèles à l'axe médian (M) de la douille (70, 70ₐ, 70_{b}), de nervures extérieures (76, 76ₐ, 76ₙ), qui, en position de fixation, sont associées à des rainures radiales (82), les rainures radiales (82) étant le cas échéant montées au plus profond de la rainure (24) de la rainure longitudinale (20) du profilé creux (10) ainsi que dans des surfaces, tournées l'une vers l'autre, de nervures profilées (18) délimitant la rainure longitudinale sur la face latérale profilée (16).

18. Ensemble selon l'une des revendications 16 et 17, **caractérisé en ce que** les arêtes latérales (79ₐ) d'un groupe (80) de nervures extérieures (82) sont alignées ensemble parallèlement à l'axe médian (M) et/ou **en ce que** l'arête latérale (79ₐ) inclinée de la nervure extérieure (82) forme une résistance au contact entre la douille (70, 70ₐ, 70_{b}) ainsi qu'entre les rainures radiales (82) associées.

19. Ensemble selon au moins l'une des revendications précédentes, avec une douille (70, 70ₐ, 70_{b}) insérée dans la rainure longitudinale (20), munie de nervures extérieures (76, 76ₐ, 76ₙ) latérales, dépassant de sa surface périphérique (74) et susceptibles d'être insérées dans les rainures radiales (82) du profilé creux (10), **caractérisé en ce qu'**à la douille (70, 70ₐ, 70_{b}) est associée une vis de serrage (84, 85) susceptible d'être insérée dans l'espace intérieur (72), vis de serrage sur la tête de vis (86) de laquelle est formée sur une tige ronde (88), la tige ronde (88) se transformant, à distance (z₃) de la tête de vis (86), en une tige de vis (90) coaxiale.

20. Ensemble selon la revendication 19, **caractérisé en ce que** le diamètre extérieur (q₁) du filetage (89) ou de la tige de vis (90) est plus gros que le diamètre intérieur (k₁) de l'espace intérieur de douille (72).

21. Ensemble selon la revendication 19, **caractérisé en ce que** l'espace intérieur (72) de la douille (70, 70_{b}) présente un tronçon cylindrique auquel se raccorde une section transversale polygonale (73ₐ), dont les arêtes parallèles à l'axe sont réalisées sous la forme de goulottes à entailles (66).

22. Ensemble selon la revendication 19, **caractérisé en ce que** sur la tête de vis (86) de la vis de serrage (85) est formée sur une tige (88), munie du filetage (90) à une distance (z₃) de la tête de vis.

23. Ensemble selon la revendication 22, **caractérisé en ce qu'**entre la tête de vis (86) et le filetage (90) s'étend un tronçon rond (89) de la tige (88), dont la longueur (z₃) correspond à peu près à deux tiers de la longueur (z₁) de la tige.

24. Ensemble selon la revendication 22 ou 23, **caractérisé en ce que** le diamètre extérieur (q₁) du filetage (90) est supérieur au diamètre (q₄) d'un passage (83) dans une paroi arrière (94), délimitant l'espace intérieur de douille (72) et traversée par la tige (88), de la douille (71).

25. Ensemble selon la revendication 24, **caractérisé en ce que** le filetage (90) forme sur la tige (88) une arête annulaire (92), tournée vers la tête de vis (86), de la vis de serrage (85), en tant qu'organe de mise en butée, dont le partenaire est la paroi arrière (94) en forme d'anneau de la douille (71), la vis de serrage (85) étant le cas échéant est disposée de façon déplaçable axialement dans la douille (71), entre sa tête de vis (86) et l'arête annulaire (92).

26. Ensemble selon l'une des revendications 22 à 25, **caractérisé en ce que** lors de la mise en butée de la tête de vis (86) de la vis de serrage (85), sur le bord de douille (68ₜ) extérieur, associé, de la douille (71), le filetage (90) sort de la douille (71) à une autre extrémité et/ou **en ce qu'**un tronçon longitudinal de l'espace intérieur (72) de la douille (71) est réalisé sous la forme de section transversale polygonale (73ₙ), en particulier de section transversale hexagonale, et se raccorde à un tronçon cylindrique de l'espace intérieur de douille (72), les arêtes, parallèles à l'axe, du tronçon polygonal (73ₙ) étant réalisées de préférence sous la forme de goulotte à entaille (66).

27. Ensemble selon l'une des revendications 24 à 26, **caractérisé en ce que** sur la douille (71) à son extrémité éloignée de la paroi arrière (94) est formée, sur une collerette (96) axiale et à l'intérieur de laquelle la tige (88) est disposée de façon déplaçable.

28. Ensemble selon l'une des revendications 24 à 27, **caractérisé en ce que** la collerette (96) délimite, avec la surface périphérique (74) de la douille (71), une zone annulaire (68) de la douille (71), et/ou la hauteur (h₃) de la collerette (96) prolonge la longueur de contact (y₃) entre douille (71) et vis de serrage (85), de préférence d'à peu près 20,5 mm.

29. Ensemble selon au moins l'une des revendications 13 à 28, **caractérisé en ce que** la nervure extérieure (76, 76ₐ, 76ₙ), de section transversale à peu près triangulaire au moins dans sa zone d'extrémité libre, avec ses faces de nervure (78) latérales se transforme en goulotte profilées (75) de la surface périphérique de douille (74), les deux faces de nervure (78) se transformant le cas échéant en une pointe de nervure (77ₙ) réalisée de préférence sous la forme de tranchant.

30. Ensemble selon l'une des revendications 13 à 22, **caractérisé en ce que** la nervure extérieure (76, 76ₐ, 76ₙ) présente à une extrémité une arête latérale (79ₐ) qui, par sa ligne radiale (Q) placée à peu près par le centre de la nervure extérieure, forme un angle (t) environ 45°, la nervure extérieure (76, 76ₐ, 76ₙ) étant le cas échéant écrasée sur son arête latérale (79ₐ) inclinée.

31. Ensemble selon l'une des revendications 13 à 30, **caractérisé par** un corps (81) en forme de parallélépipède rectangle, plat, du genre d'un plateau sur une arête latérale (79) de la nervure extérieure (76ₙ), le corps (81) du genre d'un plateau entourant le cas échéant axialement les nervures extérieures (76ₙ) sur leur face de nervure (78) éloignée de la collerette (96), et/ou l'arête latérale (79ₐ) inclinée de la nervure extérieure (76, 76ₐ, 76ₙ) forme une résistance de contact entre la douille (70, 70ₐ, 70ₙ) et les rainures radiales (82) associées.

32. Ensemble selon l'une des revendications 13 à 31, **caractérisé par** au moins trois groupes (80), parallèles à l'axe médian (M) de la douille (71), de nervures extérieures (76, 76ₐ, 76ₙ), qui, en position de fixation, sont associées à des rainures radiales (82), sachant que, le cas échéant, les arêtes latérales (79, 79ₐ), d'un groupe (80) de nervures extérieures (76, 76ₐ, 76ₙ), étant le cas échéant en alignement ensemble, parallèlement à un axe médian (M).

33. Ensemble selon la revendication 32, **caractérisé en ce que** les rainures radiales (82) sont montées au plus profond des rainures (24) de la rainure longitudinale (20) du profilé creux (10), ainsi que dans des surfaces, tournées les unes vers les autres, de nervures profilées (18), délimitant la rainure longitudinale sur la face latérale profilée (16).
